# EUROPEAN PATENT SPECIFICATION

(11) **EP 3 887 731 B1**
(45) Date of publication and mention of the grant of the patent: **20.07.2022**
(21) Application number: 19831897.4
(22) Date of filing: 29.11.2019
(51) Int. Cl.: F24F 13/14, B01D 46/00, F24F 13/28, F24F 13/08, F24F 11/39, F24F 1/0073, F24F 5/00, F24F 110/10

(54) **FAN COIL**
GEBLÄSEKONVEKTOR
VENTILO-CONVECTEUR

(30) Priority: 29.11.2018 IT 201800010687
(43) Date of publication of application: 06.10.2021
(73) Proprietor: AERMEC S.p.A., 37040 Bevilacqua (VR) (IT)
(72) Inventor: RIELLO, Giordano, 37040 Bevilacqua (VR) (IT); CAVALLO, Pierpaolo, 37040 Bevilacqua (VR) (IT); FACCIO, Franco, 37040 Bevilacqua (VR) (IT); CARPANESE, Filippo, 37040 Bevilacqua (VR) (IT)
(74) Representative: Bellemo, Matteo
(86) International application number: PCT/IB2019/060334
(87) International publication number: WO 2020/110086

(56) References cited:
- JP-A- H10 318 553
- JP-A- 2006 064 216
- JP-B2- 3 260 614
- JP-U- S5 661 836
- JP-U- S5 672 125
- KR-B1- 101 349 310
- US-A1- 2015 283 489

## Description

### CROSS-REFERENCE TO RELATED APPLICATIONS

This patent application claims priority from Italian patent application no. 102018000010687 filed on 29/11/2018.

### TECHNICAL FIELD

The present invention relates to a fan coil unit.

In greater detail, the present invention relates to a wall-mounted fan coil unit.

### BACKGROUND ART

As is known, wall-mounted fan coil units are substantially parallelepiped-shaped devices, which are arranged in a vertical position inside the room to be air-conditioned, usually close to the floor and adjacent to one of the walls of the room, and are adapted to heat or cool the air inside the room.

In greater detail, the fan coil units currently on the market usually comprise: a rigid and substantially parallelepiped-shaped, outer box-like casing which is structured for being firmly fixed to the wall in a vertical position, more or less at about ten centimetres from the floor, and is internally provided with a large through duct, usually having a rectangular section, which extends vertically from one side of the box-like casing to the other, and is closed at the top by a protective grating; an air/liquid heat exchanger which is placed inside the duct so as to be skimmed/crossed by the air flowing along the duct, and is connected to an external hydraulic circuit so as to be also continuously crossed by a flow of hot or cold water; and an electrically-operated fan, which is placed inside the vertical through duct, upstream of the heat exchanger, and is adapted to produce an upward airflow that flows through the whole length of the vertical through duct, passing through/ skimming the heat exchanger.

Usually the aforementioned fan coil units additionally comprise: an air filter with a plate-like structure, which is arranged to close the lower mouth of the vertical through duct, beneath the fan; and a condensation-collection tray which is placed immediately beneath the heat exchanger, and is adapted to collect the drops of condensed water that, in use, fall from the heat exchanger when the same is crossed by cold water.

Being structured to retain fine dust and other impurities suspended in the air entering the through duct, the air filter must be periodically extracted and cleaned or replaced so as to maintain healthy the air circulating inside the room.

Unfortunately, the timing for air-filter maintenance is strictly correlated to the quality of the air present in the environment to be air-conditioned, and is often not respected for various reasons.

To overcome this drawback, fan coil units have been recently put on the market wherein the electronic control unit of the fan coil unit takes into account the operating hours of the appliance starting from the last maintenance of the air filter, and is programmed to light a warning LED on the control panel when the operating hours reach a pre-determined limit value at which it is necessary to perform the next maintenance of the air filter.

Unfortunately, very often the illumination of the LED is not immediately noticed by the people in the room, with all problems that this entails.

The clogged air filter, in fact, as well as compromising the quality of the air, additionally reduces the efficiency of the fan coil unit with the resulting increase in operating costs. JP2006064216 A discloses a fan coil unit wherein the air filter is placed behind a protective grating which is hinged to the outer casing so as to rotate between a closed position in which the protective grating is flush with the face of the outer casing, and an open position in which the protective grating is tilted with respect to the same face of the outer casing so as to allow free access to the air filter. JP3260614 B2 discloses another fan coil unit according to the state of the art.

### DISCLOSURE OF INVENTION

Aim of the present invention is to overcome the drawbacks described above.

In compliance with these aims, according to the present invention there is provided a fan coil unit as defined in Claim 1 and preferably, though not necessarily, in any one of the claims dependent thereon.

### BRIEF DESCRIPTION OF THE DRAWINGS

The present invention will now be described with reference to the annexed drawings, which illustrate a non-limiting embodiment, wherein:
- Figure 1 is a perspective view of a wall-mounted fan coil unit realized according to the teachings of the present invention;
- Figure 2 is a perspective view of the lower part of the fan coil unit shown in Figure 1, in a second operating configuration;
- Figure 3 is a side view of the fan coil unit shown in Figure 1, sectioned along the midplane and with parts removed for clarity's sake;
- Figure 4 is a partially exploded perspective view of the fan coil unit shown in Figure 1, without the outer casing and with parts removed for clarity's sake;
- Figure 5 is a perspective view of a second embodiment of the fan coil unit shown in Figure 1; whereas
- Figure 6 is a side view of the upper part of the fan coil unit shown in Figure 5, sectioned along the midplane and with parts removed for clarity's sake.

### BEST MODE FOR CARRYING OUT THE INVENTION

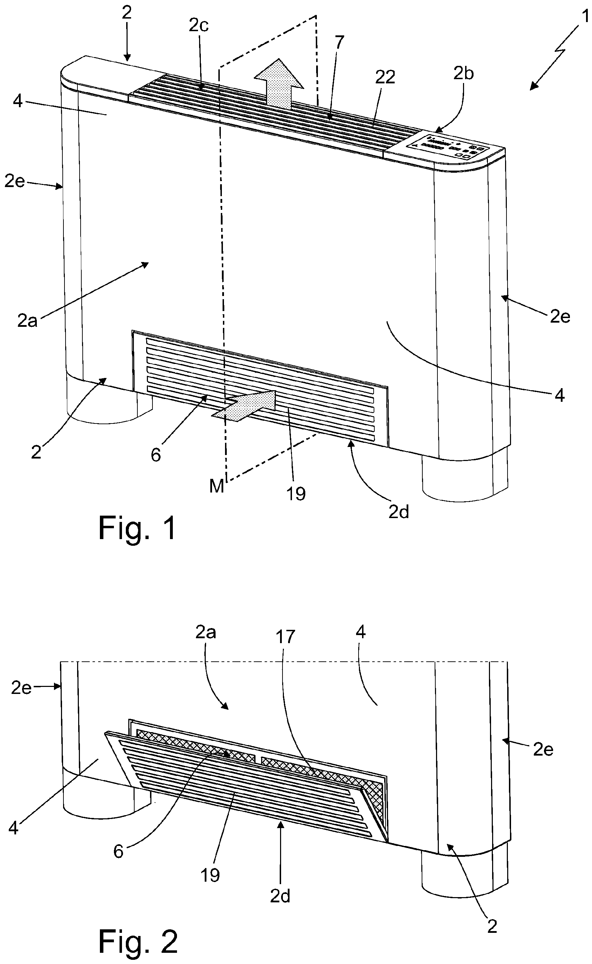

With reference to Figures 1, 2, 3 and 4, number 1 denotes as a whole a wall-mounted fan coil unit, which is adapted to heat or cool the air present inside a generic room to be air-conditioned, and is particularly adapted for being arranged inside the room to be air-conditioned in a substantially vertical position, preferably adjacent to one of the walls of the room and preferably at a short distance from the floor.

In addition, the fan coil unit 1 is additionally particularly adapted for being firmly anchored to the wall of the room to be air-conditioned.

In greater detail, the fan coil unit 1 is provided with a rigid and substantially parallelepiped-shaped, outer box-like casing 2 which has: a front face 2a and a rear face 2b opposite to one another and substantially perpendicular to the midplane M of the fan coil unit; an upper face 2c and a lower face 2d opposite to one another and substantially perpendicular to the midplane M of the fan coil unit; and finally two side faces 2e that are arranged on opposite sides of the midplane M of the fan coil unit, spaced by the midplane M.

The box-like casing 2, in addition, is adapted to be hung/fixed to the wall P of the room to be conditioned in a substantially vertical position, so that the front face 2a, the rear face 2b, and the two side faces 2e are substantially vertical, and that the upper face 2c and the lower face 2d are substantially horizontal.

Preferably the box-like casing 2 of fan coil unit 1 is moreover adapted to be fixed onto the wall P of the room to be air-conditioned, with the rear face 2b resting on/abutting against the wall P, and preferably with the lower face 2d at about 5-15 cm (centimetres) above the floor S.

In greater detail, the fan coil unit 1 preferably comprises: a substantially rigid and self-supporting inner framework 3 which is structured for being firmly fixed to the wall P, at a given distance from the floor S underneath; and a concave and substantially rigid, outer shell or covering 4 which is fixed/ fitted onto the inner framework 3 so as to surround and cover the inner framework 3, forming at least the front face 2a and the two side faces 2e of outer casing 2, and optionally also the upper face 2c and/or the lower face 2d of outer casing 2.

In addition, the fan coil unit 1 is provided with a large through duct 5 which is adapted to be crossed by the outside air, and which extends through the outer casing 2 preferably while remaining astride the midplane M.

In greater detail, the through duct 5 is preferably substantially L-bent so that the inlet mouth 6 of the duct is located on the front face 2a of outer casing 2, preferably adjacent to the lower face 2d, and that the outlet mouth 7 of the duct is located on the upper face 2c of outer casing 2.

In other words, the inner framework 3 and the outer shell or covering 4 jointly form/define a large through duct 5 that starts at the front face 2a and ends at the upper face 2c of the outer casing 2.

Preferably, in addition the inlet mouth 6 and/or the outlet mouth 7 of through duct 5 is/are substantially rectangular in shape.

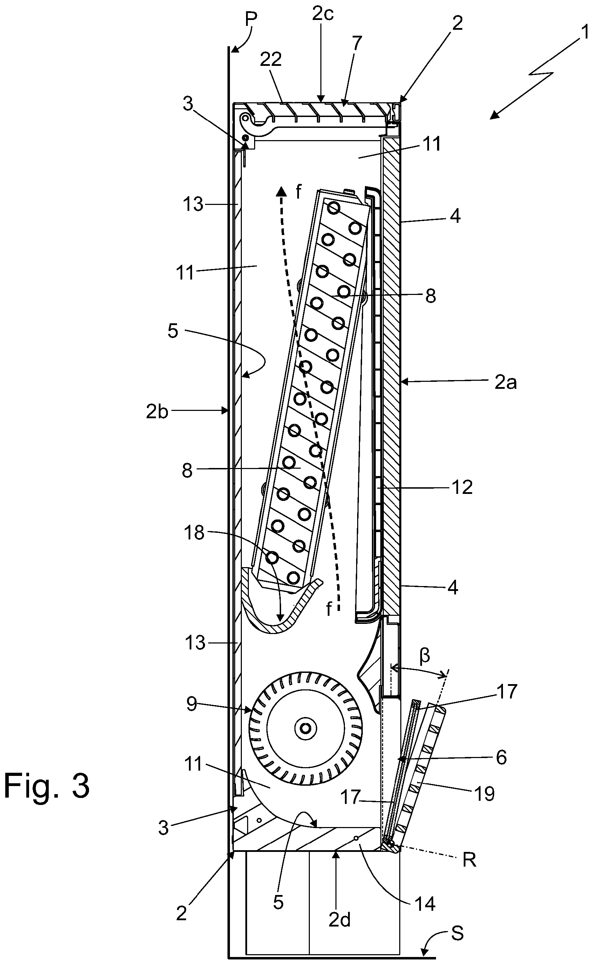

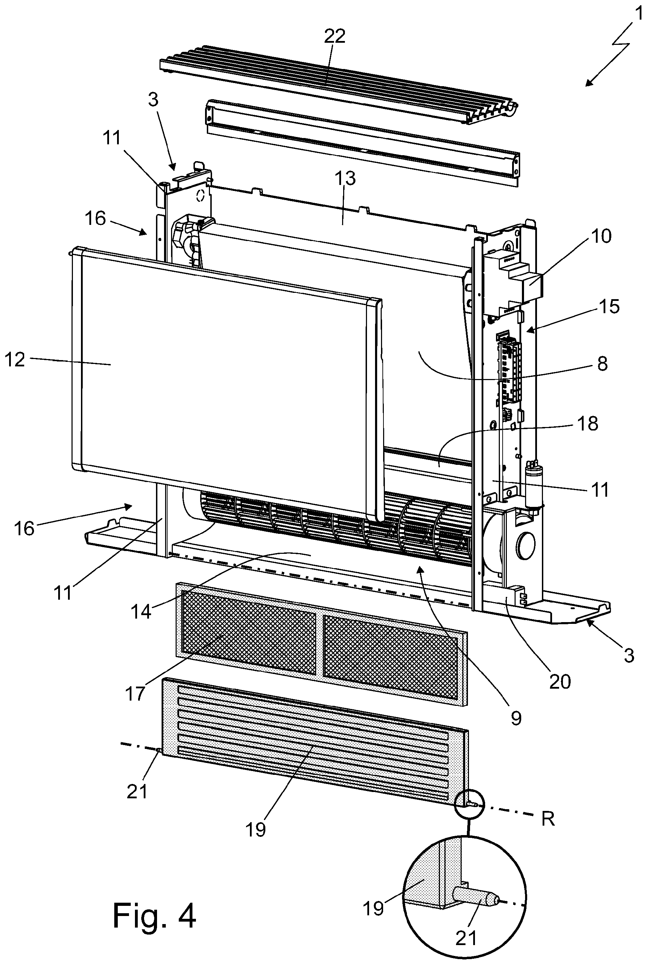

With reference to Figures 3 and 4, the fan coil unit 1 additionally comprises at least one air/liquid heat exchanger 8 preferably having a plate-like structure, and an electrically-operated fan 9.

The heat exchanger 8 is placed inside the through duct 5, preferably immediately upstream of the outlet mouth 7, so as to be crossed or in any case skimmed by the air entering into the through duct 5 through the inlet 6 and flowing along the duct, and is adapted to be connected to an external hydraulic circuit (not shown) so as to be continuously crossed by a flow of water or other heat-transfer liquid at a given temperature. The temperature value of the water or other heat-transfer liquid, in addition, is preferably controlled by an external cooling and/or heating station.

In other words, the heat exchanger 8 is preferably placed along the vertical portion of the through duct 5.

The fan 9, on the other hand, is placed inside the through duct 5, preferably between the heat exchanger 8 and the inlet mouth 6 of through duct 5, so as to generate a rising airflow f that flows along the through duct 5 crossing/skimming the heat exchanger 8.

In greater detail, the fan 9 is preferably placed at the elbow of the through duct 5, and is adapted to generate an airflow f that enters into the through duct 5 through the inlet mouth 6 located on the front face 2a of outer casing 2, diverts upwards at the fan 9, passes through/skims the heat exchanger 8, and then proceeds along the vertical segment of through duct 5 towards the outlet mouth 7 located on the upper face 2c of outer casing 2, from where flows out of the fan coil unit 1.

In addition, the fan coil unit 1 is provided with an electronic control unit 10 which is placed inside the box-like casing 2, and is adapted to control the fan 9 based on the signals arriving from one or more temperature sensors (not shown) adapted to detect the temperature of the air around the fan coil unit 1, and/or based on the signals arriving from one or more temperature sensors (not shown) adapted to detect the temperature of the heat exchanger 8.

With reference to Figures 3 and 4, in the example shown, in particular, the inner rigid framework 3 preferably comprises: two rigid and preferably substantially rectangular-shaped, plate-like lateral elements 11 which are preferably made of metal material, are arranged on opposite sides of the midplane M of the fan coil unit, substantially parallel to one another and facing each other and the midplane M, and are structured so as to be fixed by a side to the wall P; and preferably also a plate-like transversal longitudinal member 12 preferably made of metal material, which extends astride the two plate-like lateral elements 11, more or less perpendicularly to the midplane M and to the two plate-like lateral elements 11, so as to rigidly connect the two plate-like lateral elements 11 to one another.

The plate-like transversal longitudinal member 12, in addition, is preferably oriented so as to be also substantially parallel and spaced from the lying plane of the two sides of the plate-like lateral elements 11 adapted to be arranged in abutment on the wall P.

The through duct 5 is laterally delimited by the two plate-like lateral elements 11.

Optionally the inner rigid framework 3 additionally comprises a plate-like rear partition panel 13 preferably made of metal material, which extends astride the two plate-like lateral elements 11, so as to substantially skim the wall P and, thus, be locally substantially parallel and spaced from the plate-like transversal longitudinal member 12.

The partition panel 13, if present, contributes to form the rear face 2b of the outer box-like casing 2.

The plate-like transversal longitudinal member 12 delimits, together with the two plate-like lateral elements 11 and, if present, with the rear partition panel 13, the vertical segment of through duct 5.

Preferably the heat exchanger 8 is thus placed between the two plate-like lateral elements 11 of inner framework 3, beside the plate-like transversal longitudinal member 12.

Preferably the heat exchanger 8 is moreover a substantially rectangular-shaped, finned pack heat exchanger, and is preferably oriented and dimensioned so as to substantially take up the whole area/cross-section of through duct 5.

In greater detail, the heat exchanger 8 has a plate-like structure and is preferably tilted by some degrees with respect to the vertical, so as to have a lower lateral edge adjacent to or resting on the partition panel 13 and an upper lateral edge adjacent to or resting on the plate-like transversal longitudinal member 12.

The fan 9, on the other hand, is preferably placed between the two plate-like lateral elements 11 of inner framework 3, spaced beneath the heat exchanger 8.

The inlet mouth 6 of through duct 5, in turn, is preferably realized on the outer shell or covering 4, spaced beneath the transversal longitudinal member 12, so as to be substantially horizontally aligned with the fan 9.

In greater detail, the fan 9 is preferably an electrically-operated tangential fan, and extends astride the two plate-like lateral elements 11 of inner framework 3, spaced beneath the heat exchanger 8, preferably so that the volute 14 of the fan 9 contributes to form the lower face 2d of outer box-like casing 2.

With reference to Figure 4, in addition, the inner rigid framework 3, or rather the two plate-like lateral elements 11 of the inner framework 3, and the outer shell or covering 4 are preferably shaped/structured so as to form/delimit two lateral service compartments 15 and 16 that are located inside the box-like casing 2, on opposite sides of through duct 5 and of the midplane M of the fan coil unit, so as to both skim/be adjacent to the wall P of the room.

The service compartment 15 preferably accommodates the electronic control unit 10 and optionally also the temperature sensor (s) and/or the electrical connectors (not visible in the figures) that allow to connect the fan coil unit 1, or rather the fan 9, to the external electrical network (not shown).

The service compartment 16, on the other hand, preferably accommodates the hydraulic fittings, the on-off valves and the other hydraulic components (not shown in the figures) that allow to connect the heat exchanger 8 to the external hydraulic circuit (not shown).

With reference to Figures 2, 3 and 4, in addition, the fan coil unit 1 is provided with an air filter 17 and preferably also with a condensate-collection tray 18.

The air filter 17 is placed behind a protective grating 19 which is arranged to close the inlet mouth 6 of through duct 5, and is preferably structured so as to retain most of the dust suspended in the air entering the through duct 5.

In greater detail, the air filter 17 preferably has a plate-like structure, and is preferably dimensioned so as to close substantially the whole section of the inlet mouth 6 of through duct 5.

The air filter 17, in addition, is fixed in manually removable manner to the box-like casing 2 or to the back of protective grating 19.

The protective grating 19, in turn, is hinged, preferably in flag manner, to the box-like casing 2, or rather on the two plate-like lateral elements 11 of inner framework 3, so as to rotate about a preferably substantially horizontal, i.e. orthogonal to midplane M, rotation axis R between a closed position (see Figure 1) in which the protective grating 19 is substantially coplanar/flush with the front face 2a of box-like casing 2, so as to hide and close/recess the air filter 17 inside the through duct 5; and an open position (see Figures 2 and 3) in which the protective grating 19 is tilted forward by a given angle β and preferably greater than or equal to 15°, so as to allow access to the air filter 17 behind it.

With reference to Figure 4, in addition the fan coil unit 1 also comprises an electromechanical actuator 20 that is placed inside the box-like casing 2, and is adapted to move, on command, the movable protective grating 19 from the closed position to the open position.

Preferably, though not necessarily, the electromechanical actuator 20 can additionally be structured so as to move, on command, the movable protective grating 19 back in the closed position.

The electronic control unit 10, in turn, is adapted to command the electromechanical actuator 20 so as to arrange the protective grating 19 in the open position when given operating conditions occur.

In greater detail, in the example shown, the protective grating 19 is preferably provided with two protruding pins 21 which extend cantilevered from the perimeter edge of protective grating 19, on opposite sides of the protective grating 19 and of midplane M, while remaining coaxial to the axis R. The two protruding pins 21 are rigidly integral with the body of protective grating 19, and are adapted to engage in axially rotatable manner corresponding seats formed on the two plate-like lateral elements 11 of inner framework 3 .

Preferably the protruding pin 21 facing the service compartment 15 is furthermore dimensioned so as to protrude inside the service compartment 15.

The electromechanical actuator 20, on the other hand, is preferably located inside the service compartment 15, at protruding pin 21 of protective grating 19, and is structured so as to rotate, on command, the protruding pin 21 about axis R, so as to vary on command the tilting angle of protective grating 19 with respect to the front face 2a of outer casing 2.

In greater detail, the electromechanical actuator 20 is preferably an electrically-operated rotary actuator which is coupled in angularly rigid manner to the protruding pin 21 of protective grating 19, and is capable of rotating the protruding pin 21 by an angle β of given amplitude in clockwise and counter clockwise direction, so as to move/rotate, on command, the protective grating 19 from the closed position to the open position and vice versa.

The electronic control unit 10, on the other hand, is preferably programmed/configured so as to activate the electromechanical actuator 20 when the operating hours of fan coil unit 1 reach a pre-determined limit value.

In other words, the electronic control unit 10 is preferably programmed/configured so as to count the operating hours of fan coil unit 1 from the last maintenance of air filter 17, and to activate the electromechanical actuator 20 for arranging the protective grating 19 in the open position, when the operating hours of the fan coil unit 1 reach a pre-determined limit value. Limit value at which it is highly recommended to perform a new maintenance of the air filter 17.

In the example shown, in particular, the electronic control unit 10 is preferably programmed/configured so as to activate the electromechanical actuator 20 when the fan coil unit 1 exceeds, for example, 200 operating hours without maintenance of the air filter 17.

Optionally the electronic control unit 10 is additionally programmed/configured so as to activate the electromechanical actuator 20 when a clogging in the air filter 17 is detected.

Preferably, the electronic control unit 10 is moreover programmed/configured so as to interrupt/prevent the working of fan 9 when the fan coil unit 1 exceeds the pre-determined limit value of the operating hours without maintenance and/or when a clogging in the air filter 17 is detected.

In this case, the fan coil unit 1 is preferably additionally provided with at least one filter-cleaning sensor (not shown), preferably of optoelectronic or capacitive type, which is adapted to determine, in real time or cyclically, the degree of clogging of the air filter 17 and then communicate the same to the electronic control unit 10.

With reference to Figures 3 and 4, on the other hand, the condensate-collection tray 18 is preferably located immediately beneath the heat exchanger 8, and is adapted to collect the drops of condensed water that, in use, are formed on and fall by gravity from the heat exchanger 8 when the exchanger cools the airflow flowing through the through duct 5.

In greater detail, in the example shown the condensate-collection tray 18 preferably extends astride the two plate-like lateral elements 11 of inner framework 3, substantially alongside the lower edge of the plate-like transversal longitudinal member 12.

Preferably, a small drainage tube (not shown) moreover branches off from the bottom of condensate-collection tray 18 and connects the condensate-collection tray 18 to an external water discharge duct (not shown) so as to drain for gravity the condensation water into the duct.

With reference to Figures 1, 3 and 4, finally the fan coil unit 1 is preferably also provided with an upper protective grating 22 which is fixed, preferably in manually removable manner, to the upper face 2c of outer casing 2, at closure of the outlet mouth 7 of through duct 5.

Operation of fan coil unit 1 is easily inferable from what written above. When protective grating 19 moves into the open position, the air filter 17 becomes easily accessible from the outside and can be easily removed from the inlet mouth 6 for scheduled maintenance.

The advantages connected to the automatic opening of protective grating 19 are remarkable.

Experimental tests have shown that the people inside the room where fan coil unit 1 is located, notice more easily and in time the movement of protective grating 19 into the open position, thus allowing to carry out a correct periodic maintenance (cleaning or replacement) of the air filter 17.

It is finally clear that modifications and variants may be made to the fan coil unit 1 described above without however departing from the scope of the present invention.

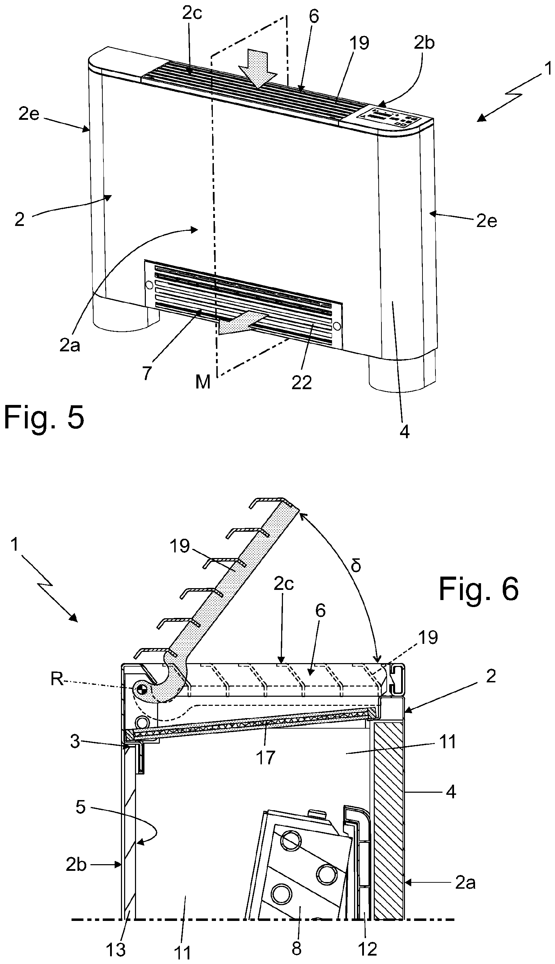

For example, with reference to Figures 5 and 6, in a different embodiment of fan coil unit 1, the fan 9 is structured so as to generate a downward airflow f.

In other words, in this embodiment, the inlet mouth 6 of through duct 5 is located on the upper face 2c of outer casing 2, whereas the outlet mouth 7 of through duct 5 is located on the front face 2a of outer casing 2, preferably adjacent to the lower face 2d.

In this embodiment, the movable protective grating 19 is therefore placed at the upper face 2c of outer casing 2, and the air filter 17 is arranged, in manually removable manner, beneath the protective grating 19.

The electromechanical actuator 20, in turn, is adapted to rotate, on command, the protective grating 19 about the axis R between a closed position (see Figure 5) in which the protective grating 19 is arranged substantially coplanar/flush with the upper face 2c of box-like casing 2, so as to hide and close/ recess the air filter 17 inside the through duct 5; and an open position (see Figures 6) in which the protective grating 19 is tilted by a given angle δ preferably greater than 45°, so as to allow access to the air filter 17 beneath.

The upper protective grating 22, on the other hand, is fixed, preferably in manually removable manner, on the front face 2a of outer casing 2, obviously to close of the outlet mouth 7 of through duct 5.

Finally, in a not-shown alternative embodiment, the electromechanical actuator 20 of fan coil unit 1 can comprise: an elastic member which is preferably interposed between the inner framework 3 and the protective grating 19, and is structured so as to bring and maintain in elastic manner the protective grating 19 into the open position; and an electrically-operated holding device which is adapted to stably hold the protective grating 19 in the closed position, and to release the protective grating 19 on command, so as to allow the elastic member to bring the protective grating 19 into the open position.

In this alternative, therefore, the movement of protective grating 19 from the open position to the closed position is left to the person that physically carries out the maintenance of the air filter 17.

## Claims

1. A fan coil unit (1) comprising: a substantially parallelepiped-shaped and rigid outer casing (2) which is structured for being firmly fixed to a wall (P) in a substantially vertical position, and is provided with a large through duct (5) adapted to be crossed by the outside air; an air/liquid heat exchanger (8) that is located inside the through duct (5) so as to be skimmed/crossed by the air that flows along the duct, and is connected to an external hydraulic circuit so as to be also crossed by a hot or cold heat-transfer liquid; a fan (9) adapted to circulate the outside air inside the through duct (5); and an air filter (17) that is placed along the through duct (5), behind a protective grating (19) that is arranged to close the inlet mouth (6) of the through duct (5);
the protective grating (19) being hinged to the outer casing (2), so as to rotate around a given rotation axis (R), between a closed position in which the protective grating (19) is substantially coplanar/ flush with the face of the outer casing (2), so as to hide the air filter (17) inside the through duct (5), and an open position in which the protective grating (19) is tilted by a given angle (β, δ) with respect to the same face of the outer casing (2), so as to allow access to the air filter (17);
the fan coil unit (1) being **characterized in that** it additionally comprises: an electromechanical actuator (20) which is adapted to move, on command, the protective grating (19) from the closed position to the open position; and an electronic control unit (10) which is adapted to command said electromechanical actuator (20) so as to arrange the protective grating (19) in the open position when given operating conditions occur.

2. Fan coil unit according to Claim 1, wherein the electronic control unit (10) is adapted to also control the fan (9) based on the signals arriving from one or more temperature sensors adapted to detect the temperature of the air surrounding the fan coil unit (1), and/or based on the signals arriving from one or more temperature sensors adapted to detect the temperature of the heat exchanger (8).

3. Fan coil unit according to Claim 1 or 2, wherein the electronic control unit (10) is programmed/configured so as to activate the electromechanical actuator (20) when the operating hours of the fan coil unit (1) without maintenance of the air filter (17) reach a pre-determined limit value.

4. Fan coil unit according to Claim 1, 2 or 3, wherein the electronic control unit (10) is programmed/configured so as to activate the electromechanical actuator (20) when a clogging in the air filter (17) is detected.

5. Fan coil unit according to Claim 4, wherein the fan coil unit is additionally provided with a filter-cleaning sensor which is adapted to determine, in real time or cyclically, the degree of clogging of the air filter (17) and to communicate said degree to the electronic control unit (10).

6. Fan coil unit according to any one of the preceding claims, wherein the protective grating (19) is flag hinged to the outer casing (2).

7. Fan coil unit according to any one of the preceding claims, wherein the rotation axis (R) of the protective grating (19) is substantially horizontal.

8. Fan coil unit according to any one of the preceding claims, wherein the tilting angle (β, δ) of the protective grating (19) with respect to the face of the outer casing (2) is greater than or equal to 15°.

9. Fan coil unit according to any one of the preceding claims, wherein the inlet mouth (6) of the through duct (5) is located at the front face (2a) of the outer casing (2) and the outlet mouth (7) of the through duct (5) is located at the upper face (2c) of the outer casing (2), or vice versa.

10. Fan coil unit according to any one of the preceding claims, wherein the fan coil unit is provided with two lateral service compartments (15, 16) that are located inside the outer casing (2), on opposite sides of the through duct (5); a first service compartment (15) being adapted to accommodate the electronic control unit (10) and/or the electromechanical actuator (20); a second service compartment (16) being adapted to accommodate the hydraulic components that connect the heat exchanger (8) to the external hydraulic circuit.

11. Fan coil unit according to any one of the preceding claims, wherein the fan coil unit comprises: a rigid and self-supporting inner framework (3) which is structured for being firmly fixed to the wall (P), at a given distance from the underlying floor (S); and an outer shell or covering (4) which is fixed/fitted onto the inner framework (3) so as to surround and cover the same inner framework (3), forming at least the front face (2a) and the two side faces (2e) of the outer casing (2).

12. Fan coil unit according to any one of the preceding claims, wherein the fan (9) is an electrically-operated tangential fan.

13. Fan coil unit according to any one of the preceding claims, **characterised by** additionally comprising a condensate-collection tray (18) located beneath the heat exchanger (8).

## Patentansprüche

1. Gebläsekonvektoreinheit (1) aufweisend: ein im Wesentlichen quaderförmiges und starres Außengehäuse (2), das strukturiert ist, um fest an einer Wand (P) in einer im Wesentlichen vertikalen Position befestigt zu werden, und welches mit einem großen Durchgangskanal (5) versehen ist, der angepasst ist, um von der Außenluft durchkreuzt zu werden; einen Luft/Flüssigkeits-Wärmetauscher (8), der in dem Durchgangskanal (5) angeordnet ist, um von der Luft überstrichen/durchkreuzt zu werden, welche durch den Durchgangskanal strömt, und mit einem externen Hydraulikkreis derart verbunden ist, dass diese ebenfalls von einer heißen oder kalten Wärmeübertragungsflüssigkeit durchkreuzt wird; ein Gebläse (9), das angepasst ist, die Außenluft in den Durchgangskanal (5) zu zirkulieren; und ein Luftfilter (17), der entlang des Durchgangskanals (5) hinter einem Schutzgitter (19) angeordnet ist, welches angeordnet ist, um die Einlassmündung (6) des Durchgangskanals (5) zu verschließen; wobei das Schutzgitter (19) an dem Außengehäuse (2) derart drehbar befestigt ist, dass das Schutzgitter um eine vorgegebene Rotationsachse (R) zwischen einer geschlossenen Position, in der das Schutzgitter (19) im Wesentlichen koplanar /eben mit der Seite des Außengehäuses (2) ist, um den Luftfilter (17) im Inneren des Durchgangskanals (5) zu verstecken, und einer geöffneten Position, in der das Schutzgitter (19) um einen vorgegebenen Winkel (β, δ) in Bezug auf dieselbe Seite des Außengehäuses (2) gekippt ist, um einen Zugang zu dem Luftfilter (17) zu ermöglichen, drehbar ist;
wobei die Gebläsekonvektoreinheit (1) **dadurch gekennzeichnet ist, dass** diese zusätzlich aufweist: einen elektromagnetischen Aktor (20), der angepasst ist, um auf Befehl das Schutzgitter (19) aus der geschlossenen Position in die geöffnete Position zu bewegen; und eine elektronische Steuereinheit (10), die angepasst ist, um den elektromagnetischen Aktor (20) derart zu betätigen, dass das Schutzgitter (19) in der geöffneten Position angeordnet wird, wenn vorgegebene Betriebsbedingungen auftreten.

2. Gebläsekonvektoreinheit nach Anspruch 1, wobei die elektronische Steuereinheit (10) angepasst ist, auch das Gebläse (9) in Abhängigkeit von den Signalen, die von einem oder mehreren Temperatursensoren empfangen werden, welche angepasst sind, die Temperatur der die Gebläsekonvektoreinheit (1) umgebenden Luft zu detektieren, zu steuern, und/oder in Abhängigkeit von den Signalen, die von einem oder mehreren Temperatursensoren empfangen werden, welche angepasst sind, die Temperatur des Wärmetauschers (8) zu detektieren, zu steuern.

3. Gebläsekonvektoreinheit nach Anspruch 1 oder 2, wobei die elektronische Steuereinheit (10) programmiert/konfiguriert ist, den elektromagnetischen Aktor (20) zu aktivieren, wenn die Betriebsstunden der Gebläsekonvektoreinheit (1) ohne Wartung des Luftfilters (17) einen vorbestimmten Grenzwert überschreiten.

4. Gebläsekonvektoreinheit nach Anspruch 1, 2 oder 3, wobei die elektronische Steuereinheit (10) programmiert/konfiguriert ist, den elektromagnetischen Aktor (20) zu aktivieren, wenn ein Verstopfen des Luftfilters (17) detektiert wird.

5. Gebläsekonvektoreinheit nach Anspruch 4, wobei die Gebläsekonvektoreinheit zusätzlich mit wenigstens einem Filter-Reinigungs-Sensor versehen ist, welcher angepasst ist, in Echtzeit oder zyklisch den Grad des Verstopfens des Luftfilters (17) zu bestimmen und diesen Grad an die elektronische Steuereinheit (10) zu übermitteln.

6. Gebläsekonvektoreinheit nach einem der vorhergehenden Ansprüche, wobei das Schutzgitter (19) mit einem Klappscharnier an dem Außengehäuse (2) befestigt ist.

7. Gebläsekonvektoreinheit nach einem der vorhergehenden Ansprüche, wobei die Rotationsachse (R) des Schutzgitters (19) im Wesentlichen horizontal ist.

8. Gebläsekonvektoreinheit nach einem der vorhergehenden Ansprüche, wobei der Kippwinkel (β, δ) des Schutzgitters (19) in Bezug auf die Seite des Außengehäuses (2) größer oder gleich 15° ist.

9. Gebläsekonvektoreinheit nach einem der vorhergehenden Ansprüche, wobei die Einlassmündung (6) des Durchgangskanals (5) an der Vorderseite (2a) des Außengehäuses (2) und die Auslassmündung (7) des Durchgangskanals (5) an der Oberseite (2c) des Außengehäuses (2) oder umgekehrt, angeordnet ist.

10. Gebläsekonvektoreinheit nach einem der vorhergehenden Ansprüche, wobei die Gebläsekonvektoreinheit mit zwei lateralen Service-Kompartments (15, 16) versehen ist, welche im Inneren des Außengehäuses (2) auf einander gegenüberliegenden Seiten des Durchgangskanals (5) angeordnet sind, wobei ein erstes Service-Kompartment (15) angepasst ist, die elektronische Steuereinheit (10) und/oder den elektromagnetischen Aktor (20) aufzunehmen ein zweites Service-Kompartment (16) angepasst ist, die hydraulischen Komponenten, die den Wärmetauscher (8) mit dem externen Hydraulikkreis verbinden, aufzunehmen.

11. Gebläsekonvektoreinheit nach einem der vorhergehenden Ansprüche, wobei die Gebläsekonvektoreinheit aufweist: einen starren und selbsttragenden inneren Rahmen (3), der strukturiert ist, um an der Wand (P) in einem vorgegebenen Abstand zu dem darunter liegenden Boden (S) fest fixiert zu werden; und eine untere Schale oder Abdeckung (4), die an dem/in den inneren Rahmen (3) derart fixiert/eingepasst ist, dass diese denselben inneren Rahmen (3) umschließt und abdeckt, um wenigstens die Vorderseite (2a) und die beiden seitlichen Seiten (2e) des Außengehäuses (2) zu bilden.

12. Gebläsekonvektoreinheit nach einem der vorhergehenden Ansprüche, wobei das Gebläse (9) ein elektrisch betriebenes Tangentialgebläse ist.

13. Gebläsekonvektoreinheit nach einem der vorhergehenden Ansprüche, **dadurch gekennzeichnet, dass** zusätzlich eine unterhalb des Wärmetauschers (8) angeordnete Kondensatsammelschale (18) vorgesehen ist.

## Revendications

1. Ventilo-convecteur (1) comprenant : un carter extérieur de forme sensiblement parallélépipédique et rigide (2) qui est structuré pour être fermement fixé à une paroi (P) à une position sensiblement verticale, et est pourvu d'un grand conduit traversant (5) apte à être traversé par l'air extérieur ; un échangeur de chaleur d'air/liquide (8) qui est situé à l'intérieur du conduit traversant (5) de manière à être effleuré/croisé par l'air qui s'écoule le long du conduit, et est relié à un circuit hydraulique externe de manière à être également croisé par un liquide de transfert de chaleur chaud ou froid ; un ventilateur (9) apte à faire circuler l'air extérieur à l'intérieur du conduit traversant (5) ; et un filtre à air (17) qui est placé le long du conduit traversant (5), derrière une grille de protection (19) qui est agencée pour fermer l'embouchure d'entrée (6) du conduit traversant (5) ;
la grille de protection (19) étant articulée au carter extérieur (2), de manière à tourner autour d'un axe de rotation donné (R), entre une position fermée à laquelle la grille de protection (19) est sensiblement dans le même plan/au même niveau que la face du carter extérieur (2), de manière à cacher le filtre à air (17) à l'intérieur du conduit traversant (5), et une position ouverte à laquelle la grille de protection (19) est inclinée d'un angle donné (β, δ) par rapport à la même face du carter extérieur (2), de manière à permettre un accès au filtre à air (17) ;
le ventilo-convecteur (1) étant **caractérisé en ce qu'**il comprend en outre : un actionneur électromécanique (20) qui est apte à déplacer, sur commande, la grille de protection (19) de la position fermée à la position ouverte ; et une unité de commande électronique (10) qui est apte à commander ledit actionneur électromécanique (20) de manière à agencer la grille de protection (19) à la position ouverte lorsque des conditions de fonctionnement données surviennent.

2. Ventilo-convecteur selon la revendication 1, dans lequel l'unité de commande électronique (10) est apte à commander également le ventilateur (9) sur la base des signaux arrivant depuis un ou plusieurs capteurs de température aptes à détecter la température de l'air entourant le ventilo-convecteur (1), et/ou sur la base des signaux arrivant depuis un ou plusieurs capteurs de température aptes à détecter la température de l'échangeur de chaleur (8).

3. Ventilo-convecteur selon la revendication 1 ou 2, dans lequel l'unité de commande électronique (10) est programmée/configurée de manière à activer l'actionneur électromécanique (20) lorsque les heures de fonctionnement du ventilo-convecteur (1) sans maintenance du filtre à air (17) atteignent une valeur de limite prédéterminée.

4. Ventilo-convecteur selon la revendication 1, 2 ou 3, dans lequel l'unité de commande électronique (10) est programmée/configurée de manière à activer l'actionneur électromécanique (20) lorsqu'un colmatage dans le filtre à air (17) est détecté.

5. Ventilo-convecteur selon la revendication 4, dans lequel le ventilo-convecteur est en outre pourvu d'un capteur de nettoyage de filtre qui est apte à déterminer, en temps réel ou cycliquement, le degré de colmatage du filtre à air (17) et à communiquer ledit degré à l'unité de commande électronique (10).

6. Ventilo-convecteur selon l'une quelconque des revendications précédentes, dans lequel la grille de protection (19) est articulée en drapeau au carter extérieur (2).

7. Ventilo-convecteur selon l'une quelconque des revendications précédentes, dans lequel l'axe de rotation (R) de la grille de protection (19) est sensiblement horizontal.

8. Ventilo-convecteur selon l'une quelconque des revendications précédentes, dans lequel l'angle d'inclinaison (β, δ) de la grille de protection (19) par rapport à la face du carter extérieur (2) est supérieur ou égal à 15°.

9. Ventilo-convecteur selon l'une quelconque des revendications précédentes, dans lequel l'embouchure d'entrée (6) du conduit traversant (5) est située à la face avant (2a) du carter extérieur (2) et l'embouchure de sortie (7) du conduit traversant (5) est située à la face supérieure (2c) du carter extérieur (2), ou vice versa.

10. Ventilo-convecteur selon l'une quelconque des revendications précédentes, dans lequel le ventilo-convecteur est pourvu de deux compartiments de service latéraux (15, 16) qui sont situés à l'intérieur du carter extérieur (2), sur des côtés opposés du conduit traversant (5) ; un premier compartiment de service (15) étant apte à loger l'unité de commande électronique (10) et/ou l'actionneur électromécanique (20) ; un second compartiment de service (16) étant apte à loger les composants hydrauliques qui relient l'échangeur de chaleur (8) au circuit hydraulique externe.

11. Ventilo-convecteur selon l'une quelconque des revendications précédentes, dans lequel le ventilo-convecteur comprend : une ossature intérieure rigide et autoporteuse (3) qui est structurée pour être fermement fixée à la paroi (P), à une distance donnée du plancher sous-jacent (S) ; et une coque extérieure ou un recouvrement extérieur (4) qui est fixé/ajusté sur l'ossature intérieure (3) de manière à entourer et recouvrir la même ossature intérieure (3), en formant au moins la face avant (2a) et les deux faces latérales (2e) du carter extérieur (2).

12. Ventilo-convecteur selon l'une quelconque des revendications précédentes, dans lequel le ventilateur (9) est un ventilateur tangentiel à fonctionnement électrique.

13. Ventilo-convecteur selon l'une quelconque des revendications précédentes, **caractérisé en ce qu'**il comprend en outre un bac de collecte de condensat (18) situé au-dessous de l'échangeur de chaleur (8).
